# EUROPEAN PATENT SPECIFICATION

(11) **EP 4 445 028 B1**
(45) Date of publication and mention of the grant of the patent: **04.03.2026**
(21) Application number: 22786548.2
(22) Date of filing: 07.10.2022
(51) Int. Cl.: F04B 53/00, F16L 37/00

(54) **PORTABLE FITTING ASSEMBLY**
TRAGBARE MONTAGEANORDNUNG
ENSEMBLE RACCORD PORTABLE

(30) Priority: 15.11.2021 NL 2029756
(43) Date of publication of application: 16.10.2024
(73) Proprietor: B.B.A. Participaties B.V., 7382 AJ Klarenbeek (NL)
(72) Inventor: BRUIN, Johannes, 7325 WV Apeldoorn (NL)
(74) Representative: Geurts, Franciscus Antonius
(86) International application number: PCT/NL2022/050567
(87) International publication number: WO 2023/085923

(56) References cited:
- WO-A1-2019/117718
- CN-A- 102 758 977
- CN-A- 105 221 879
- DE-A1- 2 163 218
- GB-A- 2 593 816
- US-B2- 7 909 365

## Description

### BACKGROUND

The invention relates to a portable fitting assembly, in particular a portable fitting assembly for a pump installation or piping system that is used at construction sites, in the maritime industry, for wellpoint dewatering or for over pumping sewage.

Known fitting arrangements comprise a fitting such as a gate valve, non-return valve or flow meter. These fittings comprise a fitting body that has a fitting inlet side with a fitting inlet, and an opposite fitting outlet side with a fitting outlet. The fitting body defines a flow channel that extends between the fitting inlet and the fitting outlet.

### SUMMARY OF THE INVENTION

The known fitting assemblies are designed to handle large flows and to be robust as they are used in demanding environments. Due to these design requirements the fittings are large and heavy and therefore hard to handle. Especially at sites that are difficult to reach and/or that have little room to move, it can be hard to move the fitting around. At these sites supporting equipment such as forklifts or cranes can often not be deployed and thus the fittings need to be handled by hand.

An example of a portable fitting arrangement is known from US 7,909,365. This publication discloses a fitting arrangement of the abovementioned type, having two handles that can be hinged into radial positions to carry the fitting arrangement by hand.

It is an object of the present invention to provide a fitting assembly that is easy to handle.

According to a first aspect, the invention provides a portable fitting assembly comprising a first standard, a second standard that is spaced apart from the first standard, a fitting between the first standard and the second standard, a first conduit coupling on the first standard and a second conduit coupling on the second standard, wherein the first conduit coupling and the second conduit coupling are located outside the standards with respect to the fitting, wherein the fitting comprises a fitting body that has a fitting inlet side that defines a fitting inlet, and a fitting outlet side that defines a fitting outlet, wherein the fitting body defines a flow channel that extends between the fitting inlet and the fitting outlet, and has a center axis that extends through the fitting inlet and the fitting outlet, wherein the first standard bounds an outlet opening that corresponds to the fitting outlet and the first conduit coupling, and the second standard bounds an inlet opening that corresponds to the fitting inlet and the second conduit coupling, wherein the first standard has a first main plane and comprises a first foot that extends in the first main plane spaced apart from the center axis, a first head that extends in the first main plane spaced apart from the center axis and the first foot, and a first handle opening that forms a first handle that extends in the first main plane spaced apart from the center axis, wherein the second standard has a second main plane and comprises a second foot that extends in the second main plane spaced apart from the center axis, a second head that extends in the second main plane spaced apart from the center axis and the second foot, and a second handle opening that forms a second handle that extends in the second main plane spaced apart from the center axis, wherein the first main plane and the second main plane are spaced apart from each other along the center axis and extend substantially transverse to the center axis.

As the fitting may have a high weight, the center of gravity of the fitting assembly is located between the first main plane and the second main plane of the standards and close to the center axis. The center of gravity is located between the feet of the standards which thereby provide a stable base for the fitting assembly. The standards extend in the main planes whereby the handles of the standards extend parallel to each other and transverse to the center axis at opposite sides of and above the fitting. This configuration of the handles is favourable for a user lifting the fitting assembly as the user can conveniently grab the two handles in a natural and ergonomic posture. As the handles are located at or just above knee height when the fitting assembly stands on the ground the fitting assembly can be lifted with a straight back by a movement of the knees. As the couplings protrude sidewards, as seen by the user, the fitting assembly can be held close to the users body in balance which further reduces the strain on the back of the user. The above described advantages result in a fitting assembly that is easy to handle.

In an embodiment the first head and the second head correspond to or mate with the respective first foot and second foot whereby a first portable fitting assembly is stackable onto a second portable fitting assembly by placing the first foot and the second foot of the first portable fitting assembly onto the respective first head and second head of the second portable fitting assembly. The feet and heads provide respective notional straight support surfaces whereby the fitting assemblies can be stacked in a stable and safe manner which makes it easy to handle the fitting assemblies when stacking them.

In a further embodiment the first standard and/or the second standard comprises a stacking index whereby the respective feet of the first portable fitting assembly align with the respective heads of the second portable fitting assembly. The index aids the user to stack the portable fitting assemblies straight onto each other, which makes it more easy to handle the portable fitting assemblies when stacking them.

In a further embodiment the stacking index comprises a cam on the head and a recess in the foot that corresponds to or mates with the cam on the head. The cam-and-recess is a robust stacking index that does not interfere when handling the portable fitting assembly.

In a further embodiment the cam covers substantially half of the head in a direction parallel to the center axis. As the cams are part of the handles this configuration keeps half of the top of the handle free for the fingers of the user which are wrapped around the handle. This makes it pleasant for the user to handle the portable fitting assembly.

In an embodiment the first standard and the second standard are spaced apart from each other along the center axis over a distance that is substantially equal to the shoulder width of a human user or human carrier of the portable fitting assembly. By this configuration the handles are optimally located with respect to the arms and shoulders of the user. This makes handling of the portable fitting assembly ergonomic.

In an embodiment the first handle and the second handle are spaced apart from the center axis over the same height. In an embodiment the first handle and the second handle are respectively spaced apart from the first foot and the second foot over the same depth. By these configurations the weight of the portable fitting assembly is distributed evenly among the handles and the user carries an equal weights in each arm. The user is therefore in balance when handling the portable fitting assembly.

In an embodiment the first handle extends above the fitting in a direction away from the center axis. In an embodiment the first standard covers the contour of the fitting when viewed along the center axis. The handle and/or the standard protects the portable fitting assembly against impacts which improves the durability thereof.

In an embodiment the first foot and the first head are elongate and extend parallel to each other at opposite sides of the center axis.

In an embodiment the first handle forms the first head. In an embodiment the first standard comprises a first top rib that extends along the first handle opening transverse to the first main plane and that forms the first handle and/or the first head. In an embodiment the first standard comprises a first bottom rib that extends along the first standard transverse to the first main plane and that forms the first foot. The ribs reinforce the standard. By combining the ribs, handles, heads and feet the standards are good to produce and material is saved.

In an embodiment the first standard and the second standard are identical to each other. In an embodiment the first standard and the second standard are mirrored with respect to each other. This reduces the amount of different parts of the portable fitting assembly which is advantageous in view of production costs.

In an embodiment the portable fitting assembly comprises a panel that extends parallel to the center axis between the first standard and the second standard. In an embodiment the portable fitting assembly comprises a lid that extends parallel to the center axis between the first standard and the second standard. The panel and lid cover and protect the fitting which improves the durability thereof.

In a further embodiment the lid is hingeably connected to the respective standards in order to be hingeable between an open position and a closed position around a hinge axis that is substantially parallel to the center axis. In the closed position the fitting is covered and protected by the lid while in the open position the fitting is reachable and serviceable in an easy manner.

In an embodiment the fitting is connected to the first standard and/or to the second standard by a bolted connection. In an embodiment the respective couplings are connected to the respective standards by gluing. Bolted connections and glued connections are economically favourable types of connections.

In an embodiment the standards are made of metal, in particular of aluminium. Metal is a durable material to produce the standards of. Aluminium is also light which makes the portable fitting assembly lighter and therefore more easy to handle.

The various aspects and features described and shown in the specification can be applied, individually, wherever possible.

### BRIEF DESCRIPTION OF THE DRAWINGS

The invention will be elucidated on the basis of an exemplary embodiment shown in the attached drawings, in which:
Figures 1A and 1B are an isometric front view and an isometric rear view of a portable fitting assembly according to the invention;
Figures 2A and 2B are an isometric front view and an isometric rear view of the fitting assembly according to figures 1A and 1B from which some parts are removed; and
Figure 3 is an isometric front view of two portable fitting assemblies of figure 1A stacked onto each other.

### DETAILED DESCRIPTION OF THE INVENTION

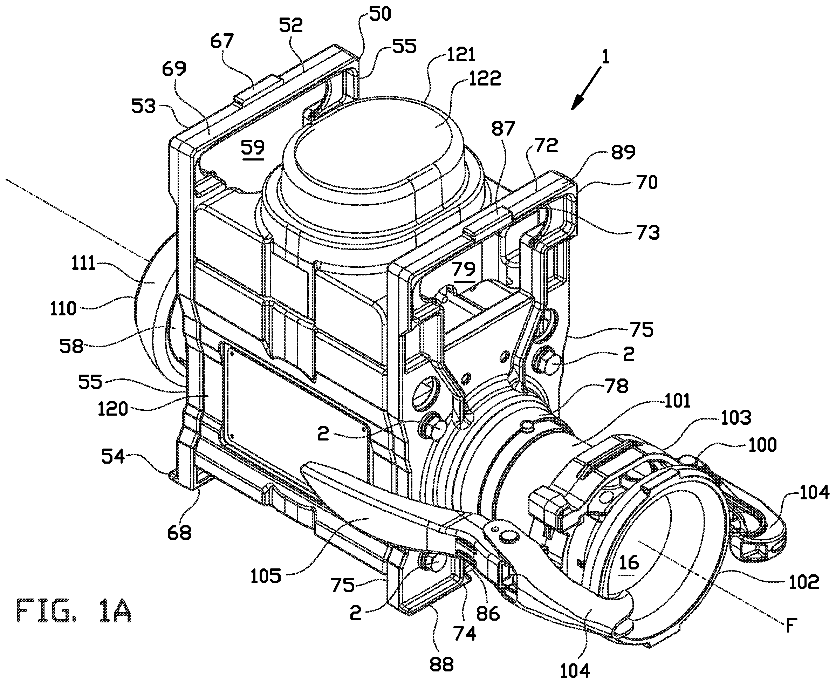

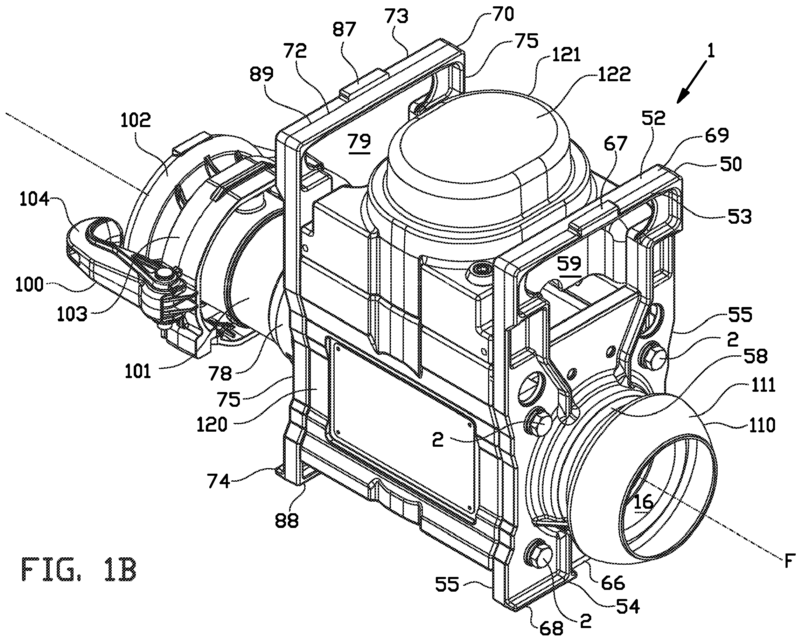

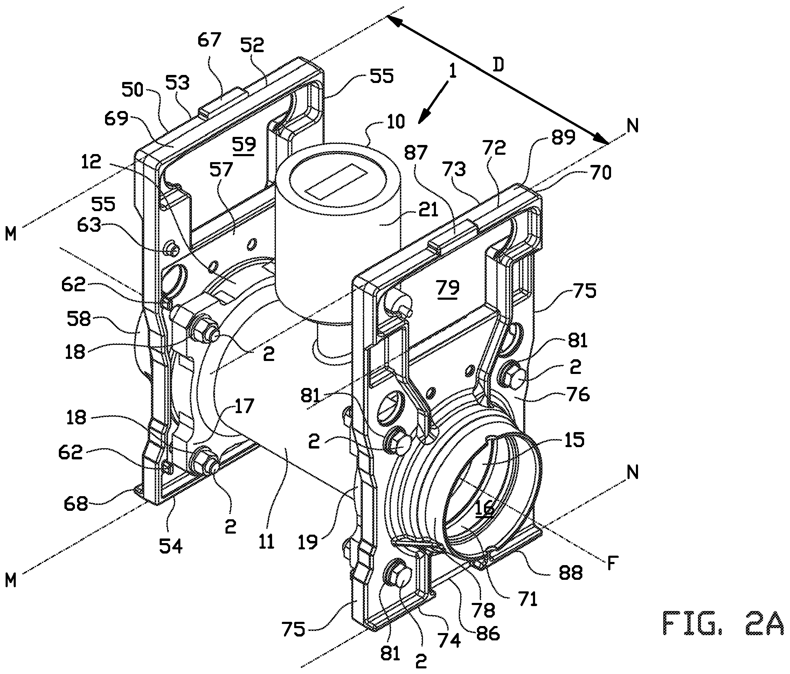

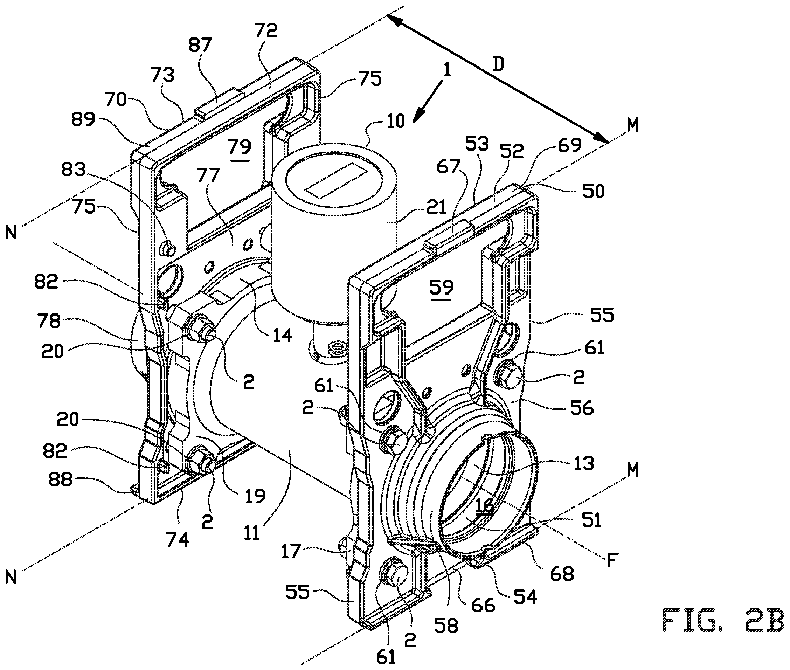

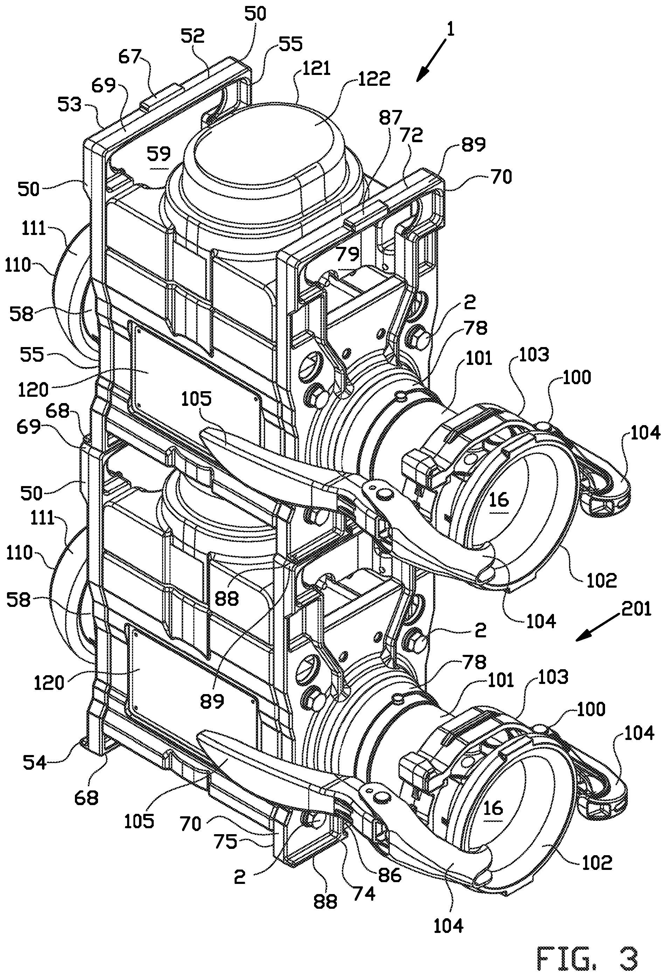

Figures 1A, 1B are an isometric view of a portable fitting assembly 1 according to the invention. The fitting assembly 1 can be used in or connected to a pump installation or piping installation that for instance is used, at construction sites, in the maritime industry, for wellpoint dewatering or for over pumping of sewage. Figures 2A and 2B are an isometric view of the portable fitting assembly 1 according to figures 1A and 1B from which some parts are removed for illustrative purposes. The fitting assembly 1 comprises a fitment or fitting 10 that can for instance be a gate valve, a non-return valve or a flow meter. In the exemplary embodiment below a flow meter is described. Figure 3 is an isometric view of two such portable fitting assemblies 1, 201 stacked onto each other. The fitting 10 can be made of metal, for instance steel, stainless steel or aluminium, of plastic, or of a combination thereof.

As shown in figures 1A and 1B the portable fitting assembly 1 comprises a metal first standard 50, a metal second standard 70 that is spaced apart from and substantially parallel to the first standard 50, metal or plastic side panels 120 that extend between the respective first standard 50 and second standard 70, a metal or plastic lid 121 that extends between and is protected by the first standard 50, the second standard 70 and the respective side panels 120. The metal standards 50, 70 are preferably made of aluminium.

The fitting assembly 1 comprises a first conduit coupling 110 on the first standard 50 and a second conduit coupling 100 on the second standard 70. The conduit couplings 100, 110 are located outside the standards 50, 70 with respect to the fitting 10. The conduit couplings 100, 110 are known per se and are used to couple the fitting assembly 1 to a not shown conduit section. The conduit couplings 100, 110 can be made of metal, for instance steel, stainless steel, aluminium or of a combination thereof. The conduit section can be a hose, tube or pipe and may be part of or integrated with an adapter piece or equipment such as a pump, a turbine or a further fitting, or coupling members such as bends, T-pieces, Y-pieces or reducers.

In this example the first conduit coupling 110 comprises a circumferential insertion collar 111 that is connected, connectable to or merges into the first standard 50.

In this example the second conduit coupling 100 comprises a coupling tube 101 that at one end is connected, connectable to or merges into the second standard 70, and that at the opposite end merges into a receiving collar 102. The second conduit coupling 100 comprises a ring 103 that surrounds and is connected to the coupling tube 101, two claws 104 that are connected to the ring 103 at opposite sides of the coupling tube 101, and a lever 105 for operating one of the claws 104.

It is to be understood that the not shown conduit sections are outfitted with a mating first and/or second conduit coupling 100, 110 to be connectable to the respective first and/or second conduit coupling 100, 110 of the fitting assembly 1. The receiving collar 102 and the insertion collar 110 correspond to each other and the claws 104 are engageable with the insertion collar 110 to connect the conduit sections to the fitting assembly 1. The standards 50, 70 of the fitting assembly 1 may comprise or be outfitted with any kind of conduit couplings, in particular with conduit couplings that correspond to the conduit couplings of the conduit sections they are to be connected with.

In figures 2A and 2B the fitting assembly 1 is shown without the side panels 120, the lid 121 and the couplings 100, 110 for illustrative reasons only. The fitting 10 comprises a fitting body 11 that has a fitting outlet side 12 that defines a circular fitting outlet 13, and an opposite fitting inlet side 14 that defines a circular fitting inlet 15. The fitting body 11 defines an internal flow channel 16 that extends between the fitting inlet 15 and the fitting outlet 13. The flow channel 16 continues into the conduit couplings 100, 110. The fitting 10 has a center axis F that extends through the center of the fitting inlet 15 and through the center of the fitting outlet 13.

The fitting 10 comprises a circumferential first flange 17 on the fitting outlet side 12 that extends from the fitting body 11 away from and transverse to the center axis F. The first flange 17 comprises first flange bolt holes 18 that are evenly distributed around the circumference of the fitting body 11. The fitting 10 comprises a circumferential second flange 19 on the fitting inlet side 14 that extends from the fitting body 11 away from and transverse to the center axis F. The second flange 19 comprises second flange bolt holes 20 that are evenly distributed around the circumference of the fitting body 11.

In this example the first flange 17 and the second flange 19 comprises four flange bolt holes 18, 20 in a rectangular configuration, in particular in a square configuration.

In this example the fitting 10 comprises a flow meter arrangement 21 that is attached to the fitting body 11 of the fitting 10 and that is in communication with the flow channel 16. The flow meter arrangement 21 protrudes upwardly from the fitting body 11.

In this example the first standard 50 and the second standard 70 are substantially identical to each other and are provided at the respective fitting outlet side 12 and fitting inlet side 14 of the fitting 10, substantially parallel and mirrored with respect to each other. The first standard 50 and the second standard 70 protrude outside or cover the contour of the fitting 10 when viewed along the center axis F.

The first standard 50 and the second standard 70 are substantially flat or plate-shaped and have a substantially rectangular outline, wherein the height and width of the standards 50 ,70 is significantly bigger than the thickness thereof, in particular the thickness thereof at the handle 52, 72, and the height is bigger than the width. In this example the height is substantially two times the width of the standard 50, 70, and the width is substantially ten times the thickness of the standard 50, 70 at the handle 52, 72.

The first standard 50 and the second standard 70 extend in a respective notional straight first main plane M and a notional straight second main plane N that are parallel to each other and transverse to the center axis F. Each standard 50, 70 comprises or merges along its circumference into a respective top rib 53, 73, a bottom rib 54, 74 that is substantially parallel to the top rib 53, 73, two parallel side ribs 55, 75 that extend between and substantially transverse to the top rib 53, 73 and bottom rib 54, 74, a front face 56, 76 and a back face 57, 77. The respective ribs 53, 54, 55, 83, 84, 85 form a continuous rib along the outline of the standards 50, 70.

The respective ribs 53, 54, 55, 83, 84, 85 have an elongate strip like shape and, in their longitudinal direction, substantially extend in the main plane M, N. The respective ribs 53, 54, 55, 83, 84, 85, in their cross direction, extend and protrude substantially transverse to the main plane M, N of the standards 50, 70 from the front face 56, 76 and/or the back face 57, 77. The ribs 53, 54, 55, 83, 84, 85 reinforce the standards 50, 70 by providing strength and stiffness thereto.

The first top rib 53 and the second top rib 73 form a first head 69 and a second head 89 both having a flat top support surface. The first head 69 and the second head 89 are elongate. The first head 69 and the second head 89 are spaced apart from the fitting 10 and extend in a notional common top support plane that extends substantially parallel to the center axis F. The first head 69 and the second head 89 extend above the fitting 10 in a direction away from the center axis F.

The first bottom rib 54 and the second bottom rib 74 form a first foot 68 and a second foot 88 both having a flat bottom support surface. The first foot 68 and the second foot 88 are elongate. The first foot 68 and the second foot 88 are spaced apart from the fitting 10 and extend in a notional common bottom support plane that extends substantially parallel to the center axis F. The first foot 68 and the second foot 88 extend below the fitting 10 in a direction away from the center axis F. The bottom support plane and the top support plane extend parallel to each other at opposite sides of the center axis F.

The first standard 50 comprises, defines or bounds a first handle opening 59 near or along the first top rib 53. The first handle opening 59 and/or the first top rib 53 defines, makes or forms an elongate first handle 52 of the first standard 50. The first handle opening 59 and the first handle 52 extend in the first main plane M. The second standard 70 comprises, defines or bounds a second handle opening 79 near or along the second top rib 73. The second handle opening 79 and/or the second top rib 73 defines, makes or forms an elongate second handle 72 of the second standard 70. The second handle opening 79 and the second handle 72 extend in the second main plane N. The handles 52, 72 are formed by the heads 69, 89, or vice versa.

The first handle opening 59 and the first handle 52 are spaced apart from the second handle opening 79 and the second handle 72 parallel to the center axis F and extend substantially transverse to the center axis F. The first standard 50 and the second standard 70, and therewith the first handle opening 59 and the second handle opening 79, and the first handle 52 and the second handle 72 are spaced apart from each other along the center axis F over a distance D that is substantially equal to the shoulder width of a human user or human carrier of the portable fitting assembly 1. The portable fitting assembly 1 weighs less than 50 kilograms whereby it is practically portable by the human user or human carrier.

The first standard 50 defines, comprises or merges into a circumferential first collar 58 that bounds a circular outlet opening 51 that corresponds to the circular fitting outlet 13 of the fitting body 11 and to the first conduit coupling 110. The second standard 70 defines, comprises or merges into a circumferential second collar that 78 that bounds a circular inlet opening 71 that corresponds to the circular fitting inlet 15 of the fitting body 11 and to the second conduit coupling 100. The respective collars 58, 78 extend from the front face 56, 76 away from the fitting 10 and substantially parallel to the center axis F. The collars 56, 76 of the respective standards 50, 70 are configured to be connectable to, merge into, carry or be part of the conduit coupling 100, 110. In this example the respective conduit couplings 100, 110 are connected to the collars 56, 76 by gluing.

As best shown in figure 3, the feet 68, 88 correspond to the heads 69, 89 as they have substantially the same dimensions and are mutually spaced apart over the same distance. This allows that the first fitting assembly 1 is stackable onto the second identical fitting assembly 201 by placing the feet 68, 88 of the first fitting assembly 1 onto the heads 69, 89 of the second fitting assembly 201, in particular by placing the respective bottom support surfaces onto the respective top support surfaces.

The standards 50, 70 comprise a cam 67, 87 on the heads 69, 89, and a recess 66, 86 in the feet 68, 88 that corresponds to or mates with the cam 66, 86 on the heads 69, 89. The cams 67, 87 and recesses 66, 86 serve as stacking indexes for the standards 50, 70 so that the feet 68, 88 of the first fitting assembly 1 are placed straight onto and aligned with the heads 69, 89 of the second fitting assembly 201. The cams 37, 87 cover substantially half of the width of the head 69, 89 in a direction parallel to the center axis F and merge only into the outer edge of the head 69, 89.

As best shown in figure 2A and 2B, the standards 50, 70 comprise standard bolt holes 61, 81 that are evenly distributed around the circumference of the respective outlet opening 51 and inlet opening 71 and/or collar 58, 78. The standard bolt holes 61, 81 correspond to the respective first flange bolt holes 18 and second flange bolt holes 20. In this example the standard bolt holes 61, 81 correspond to the four flange bolt holes 18, 20 in a rectangular configuration, in particular in a square configuration. Bolts 2 are provided through the respective flange bolt holes 18, 20 and standard bolt holes 61, 81 to provide a bolted connection between the standards 50, 70 and the fitting 10.

The standards 50, 60 comprise two oblong or oval first protrusions 62, 82 along each side edge 55, 75 thereof, and two circular second protrusions 63, 83 near the handle opening 59, 79, that protrude from the back face 57, 77 thereof. The first protrusions 62 of the first standard 50 correspond to and extend towards the first protrusions 82 of the second standard 70, and the second protrusions 63 of the first standard 50 correspond to and extend towards the second protrusions 83 of the second standard 70.

As best shown in figures 1A and 1B, the side panels extend substantially parallel to the center axis F and substantially parallel to each other. The shape of the side panels 120 matches the contour of the side edges 55, 75. The side panels 120 comprise not shown rims at their edges near the standards 50, 70. The rims protrude transverse to the side panels 120 towards the fitting 10 and extend along the standards 50, 70. The rims comprise not shown oblong holes that correspond to the first protrusions 62, 82 of the standards 50, 70. The first protrusions 62, 82 extend through the oblong holes and therewith hold/fix the side panels 120 in place between the standards 50, 70.

The lid 121 is shaped such that it covers the fitting 10 and leaves the handles 52, 72 and the handle openings 59, 79 free. In this example the lid 121 comprises an upwards bulge 122 that corresponds with the shape of the flow meter arrangement 21 that protrudes upwardly from the fitting body 11. The lid 121 comprises not shown rims at its edges near the standards 50, 70. The rims protrude transverse to the lid 121 towards the fitting 10 and extend along the standards 50, 70. At one side the lid comprises not shown circular holes that correspond to the second protrusions 63, 83 of the standards 50, 70. The second protrusions 63, 83 extend through the circular holes and therewith hingeably hold the lid 121 in place between the standards 50, 70 so that the lid is hingeable between an open position and a closed position around a hinge axis that is substantially parallel to the center axis F. At the opposite side the lid comprises not shown slots that correspond to the second protrusions 63, 83 of the standards 50, 70. The slots receive the second protrusions 63, 83 in the closed position of the lid 121. The lid 121 comprises a not shown locking mechanism between the lid 121 and one of the standards 50, 70 or one of the side panels 120 to lock the lid 121 when it is in its closed position.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined by the appended claims.

## Claims

1. Portable fitting assembly (1) comprising a first standard (50), a second standard (70) that is spaced apart from the first standard, a fitting (10) between the first standard and the second standard, a first conduit coupling (110) on the first standard and a second conduit coupling (100) on the second standard, wherein the first conduit coupling and the second conduit coupling are located outside the standards with respect to the fitting,
wherein the fitting comprises a fitting body (11) that has a fitting inlet side (14) that defines a fitting inlet (15), and a fitting outlet side (12) that defines a fitting outlet (13), wherein the fitting body defines a flow channel (16) that extends between the fitting inlet and the fitting outlet, and has a center axis (F) that extends through the fitting inlet and the fitting outlet,
wherein the first standard bounds an outlet opening (51) that corresponds to the fitting outlet and the first conduit coupling, and the second standard bounds an inlet opening (71) that corresponds to the fitting inlet and the second conduit coupling,
wherein the first standard has a first main plane (M) and comprises a first foot (68) that extends in the first main plane spaced apart from the center axis, a first head (69) that extends in the first main plane spaced apart from the center axis and the first foot, and a first handle opening (59) that forms a first handle (52) that extends in the first main plane spaced apart from the center axis,
wherein the second standard has a second main plane (N) and comprises a second foot (88) that extends in the second main plane spaced apart from the center axis, a second head (89) that extends in the second main plane spaced apart from the center axis and the second foot, and a second handle opening (79) that forms a second handle (72) that extends in the second main plane spaced apart from the center axis,
wherein the first main plane (M) and the second main plane (N) are spaced apart from each other along the center axis (F) and extend substantially transverse to the center axis.

2. Portable fitting assembly (1) according to claim 1, wherein the first head (69) and the second head (89) correspond to or mate with the respective first foot (68) and second foot (88) whereby a first portable fitting assembly (1) is stackable onto a second portable fitting assembly (201) by placing the first foot and the second foot of the first portable fitting assembly (1) onto the respective first head and second head of the second portable fitting assembly (201), wherein the first standard (50) and/or the second standard (70) preferably comprises a stacking index (66, 67, 86, 87) whereby the respective feet (68, 88) of the first portable fitting assembly (1) align with the respective heads (69, 89) of the second portable fitting assembly, wherein the stacking index preferably comprises a cam (67, 87) on the head (69, 89) and a recess (66, 86) in the foot (66, 86) that corresponds to or mates with the cam on the head, wherein the cam (67, 87) preferably covers substantially half of the head (69, 89) in a direction parallel to the center axis (F).

3. Portable fitting assembly (1) according to any one of the preceding claims, wherein the first standard (50) and the second standard (70) are spaced apart from each other along the center axis (F) over a distance (D) that is substantially equal to the shoulder width of a human user or human carrier of the portable fitting assembly.

4. Portable fitting assembly (1) according to any one of the preceding claims, wherein the first handle (52) and the second handle (72) are spaced apart from the center axis (F) over the same height.

5. Portable fitting assembly (1) according to any one of the preceding claims, wherein the first handle (52) and the second handle (72) are respectively spaced apart from the first foot (68) and the second foot (88) over the same depth.

6. Portable fitting assembly (1) according to any one of the preceding claims, wherein the first handle (52) forms the first head (69).

7. Portable fitting assembly (1) according to any one of the preceding claims, wherein the first handle (52) extends above the fitting (10) in a direction away from the center axis (F).

8. Portable fitting assembly (1) according to any one of the preceding claims, wherein the first standard (50) covers the contour of the fitting (10) when viewed along the center axis (F).

9. Portable fitting assembly (1) according to any one of the preceding claims, wherein the first foot (68) and the first head (69) are elongate and extend parallel to each other at opposite sides of the center axis (F).

10. Portable fitting assembly (1) according to any one of the preceding claims, wherein the first standard (50) comprises a first top rib (53) that extends along the first handle opening (59) transverse to the first main plane and that forms the first handle (52) and/or the first head (69).

11. Portable fitting assembly (1) according to any one of the preceding claims, wherein the first standard (50) comprises a first bottom rib (54) that extends along the first standard transverse to the first main plane (M) and that forms the first foot (68).

12. Portable fitting assembly (1) according to any one of the preceding claims, wherein the first standard (50) and the second standard (70) are identical to each other and /or are mirrored with respect to each other.

13. Portable fitting assembly (1) according to any one of the preceding claims, comprising a panel (120) that extends parallel to the center axis (F) between the first standard (50) and the second standard (70).

14. Portable fitting assembly (1) according to any one of the preceding claims, comprising a lid (121) that extends parallel to the center axis (F) between the first standard (50) and the second standard (70), wherein the lid (121) is preferably hingeably connected to the respective standards (50, 70) in order to be hingeable between an open position and a closed position around a hinge axis that is substantially parallel to the center axis (F).

15. Portable fitting assembly (1) according to any one of the preceding claims, wherein the fitting (10) is connected to the first standard (50) and/or to the second standard (70) by a bolted connection.

16. Portable fitting assembly (1) according to any one of the preceding claims, wherein the respective conduit couplings (110, 100) are connected to the respective standards (50, 70) by gluing.

## Patentansprüche

1. Tragbare Fitting-Vorrichtung (1), umfassend einen ersten Ständer (50), einen zweiten Ständer (70), der vom ersten Ständer beabstandet ist, ein Fitting (10) zwischen dem ersten Ständer und dem zweiten Ständer, eine erste Leitungskupplung (110) am ersten Ständer und eine zweite Leitungskupplung (100) am zweiten Ständer, wobei sich die erste Leitungskupplung und die zweite Leitungskupplung in Bezug auf das Fitting außerhalb der Ständer befinden,
wobei das Fitting einen Fittingkörper (11) umfasst, der eine Fittingeinlassseite (14), die einen Fittingeinlass (15) definiert, und eine Fittingauslassseite (12) aufweist, die einen Fittingauslass (13) definiert, wobei der Fittingkörper einen Strömungskanal (16) definiert, der sich zwischen dem Fittingeinlass und dem Fittingauslass erstreckt, und eine Mittelachse (F) aufweist, die sich durch den Fittingeinlass und den Fittingauslass erstreckt,
wobei der erste Ständer eine Auslassöffnung (51) begrenzt, die dem Fittingauslass und der ersten Leitungskupplung entspricht, und der zweite Ständer eine Einlassöffnung (71) begrenzt, die dem Fittingeinlass und der zweiten Leitungskupplung entspricht,
wobei der erste Ständer eine erste Hauptebene (M) aufweist und einen ersten Fuß (68), der sich in der ersten Hauptebene beabstandet von der Mittelachse erstreckt, einen ersten Kopf (69), der sich in der ersten Hauptebene beabstandet von der Mittelachse und dem ersten Fuß erstreckt, und eine erste Grifföffnung (59) umfasst, die einen ersten Griff (52) bildet, der sich in der ersten Hauptebene beabstandet von der Mittelachse erstreckt,
wobei der zweite Ständer eine zweite Hauptebene (N) aufweist und einen zweiten Fuß (88), der sich in der zweiten Hauptebene beabstandet von der Mittelachse erstreckt, einen zweiten Kopf (89), der sich in der zweiten Hauptebene beabstandet von der Mittelachse und dem zweiten Fuß erstreckt, und eine zweite Grifföffnung (79) umfasst, die einen zweiten Griff (72) bildet, der sich in der zweiten Hauptebene beabstandet von der Mittelachse erstreckt,
wobei die erste Hauptebene (M) und die zweite Hauptebene (N) entlang der Mittelachse (F) voneinander beabstandet sind und sich im Wesentlichen transversal zur Mittelachse erstrecken.

2. Tragbare Fitting-Vorrichtung (1) nach Anspruch 1, wobei der erste Kopf (69) und der zweite Kopf (89) dem entsprechenden ersten Fuß (68) und zweiten Fuß (88) entsprechen oder mit diesen zusammenpassen, wodurch eine erste tragbare Fitting-Vorrichtung (1) auf eine zweite tragbare Fitting-Vorrichtung (201) durch Platzieren des erste Fußes und des zweiten Fußes der ersten Tragbare Fitting-Vorrichtung (1) auf dem entsprechenden ersten Kopf und zweiten Kopf der zweiten Tragbare Fitting-Vorrichtung (201) stapelbar ist, wobei der erste Ständer (50) und/oder der zweite Ständer (70) vorzugsweise einen Stapelindex (66, 67, 86, 87) aufweist, wodurch die entsprechenden Füße (68, 88) der ersten tragbaren Fitting-Vorrichtung (1) mit den entsprechenden Köpfen (69, 89) der zweiten tragbaren Fitting-Vorrichtung ausrichten, wobei der Stapelindex vorzugsweise eine Nocke (67, 87) auf dem Kopf (69, 89) und eine Aussparung (66, 86) in dem Fuß (66, 86) umfasst, die mit der Nocke auf dem Kopf entspricht oder mit dieser zusammenpasst, vorzugsweise wobei die Nocke (67, 87) im Wesentlichen die Hälfte des Kopfes (69, 89) in einer Richtung parallel zur Mittelachse (F) abdeckt.

3. Tragbare Fitting-Vorrichtung (1) nach einem der vorstehenden Ansprüche, wobei der erste Ständer (50) und der zweite Ständer (70) entlang der Mittelachse (F) in einem Abstand (D) voneinander beabstandet sind, der im Wesentlichen der Schulterbreite eines menschlichen Benutzers oder menschlichen Trägers der tragbaren Fitting-Vorrichtung entspricht.

4. Tragbare Fitting-Vorrichtung (1) nach einem der vorstehenden Ansprüche, wobei der erste Griff (52) und der zweite Griff (72) von der Mittelachse (F) in gleicher Höhe beabstandet sind.

5. Tragbare Fitting-Vorrichtung (1) nach einem der vorstehenden Ansprüche, wobei der erste Griff (52) und der zweite Griff (72) jeweils über die gleiche Tiefe vom ersten Fuß (68) und vom zweiten Fuß (88) beabstandet sind.

6. Tragbare Fitting-Vorrichtung (1) nach einem der vorstehenden Ansprüche, wobei der erste Griff (52) den ersten Kopf (69) bildet.

7. Tragbare Fitting-Vorrichtung (1) nach einem der vorstehenden Ansprüche, wobei sich der erste Griff (52) über das Fitting (10) in einer Richtung weg von der Mittelachse (F) erstreckt.

8. Tragbare Fitting-Vorrichtung (1) nach einem der vorstehenden Ansprüche, wobei der erste Ständer (50), entlang der Mittelachse (F) betrachtet, die Kontur des Fittings (10) abdeckt.

9. Tragbare Fitting-Vorrichtung (1) nach einem der vorstehenden Ansprüche, wobei der erste Fuß (68) und der erste Kopf (69) länglich sind und sich parallel zueinander auf gegenüberliegenden Seiten der Mittelachse (F) erstrecken.

10. Tragbare Fitting-Vorrichtung (1) nach einem der vorstehenden Ansprüche, wobei der erste Ständer (50) eine erste obere Rippe (53) umfasst, die sich entlang der ersten Grifföffnung (59) transversal zur ersten Hauptebene erstreckt und den ersten Griff (52) und/oder den ersten Kopf (69) bildet.

11. Tragbare Fitting-Vorrichtung (1) nach einem der vorstehenden Ansprüche, wobei der erste Ständer (50) eine erste untere Rippe (54) umfasst, die sich entlang des ersten Ständers transversal zur ersten Hauptebene (M) erstreckt und den ersten Fuß (68) bildet.

12. Tragbare Fitting-Vorrichtung (1) nach einem der vorstehenden Ansprüche, wobei der erste Ständer (50) und der zweite Ständer (70) zueinander identisch sind und/oder in Bezug auf einander gespiegelt sind.

13. Tragbare Fitting-Vorrichtung (1) nach einem der vorstehenden Ansprüche, die eine Platte (120) umfasst, die sich parallel zur Mittelachse (F) zwischen dem ersten Ständer (50) und dem zweiten Ständer (70) erstreckt.

14. Tragbare Fitting-Vorrichtung (1) nach einem der vorstehenden Ansprüche, umfassend einen Deckel (121), der sich parallel zur Mittelachse (F) zwischen dem ersten Ständer (50) und dem zweiten Ständer (70) erstreckt, wobei der Deckel (121) vorzugsweise schwenkbar mit den entsprechenden Ständern (50, 70) verbunden ist, um zwischen einer offenen Position und einer geschlossenen Position um eine Schwenkachse, die im Wesentlichen parallel zur Mittelachse (F) ist, schwenkbar zu sein.

15. Tragbare Fitting-Vorrichtung (1) nach einem der vorstehenden Ansprüche, wobei das Fitting (10) mit dem ersten Ständer (50) und/oder dem zweiten Ständer (70) durch eine Schraubverbindung verbunden ist.

16. Tragbare Fitting-Vorrichtung (1) nach einem der vorstehenden Ansprüche, wobei die entsprechenden Leitungskupplungen (110, 100) mit den entsprechenden Ständern (50, 70) durch Kleben verbunden sind.

## Revendications

1. - Ensemble de raccordement portatif (1) comprenant un premier montant (50), un second montant (70) qui est espacé du premier montant, un raccord (10) entre le premier montant et le second montant, un premier manchon de raccordement pour canalisations (110) sur le premier montant et un second manchon de raccordement pour canalisations (100) sur le second montant, dans lequel le premier manchon de raccordement pour canalisations et le second manchon de raccordement pour canalisations sont situés en dehors des montants par rapport au raccord,
dans lequel le raccord comprend un organe de raccordement (11) qui a un côté d'entrée de raccordement (14) qui définit une entrée de raccordement (15), et un côté de sortie de raccordement (12) qui définit une sortie de raccordement (13), dans lequel l'organe de raccordement définit un canal d'écoulement (16) qui s'étend entre l'entrée de raccordement et la sortie de raccordement, et a un axe central (F) qui s'étend à travers l'entrée de raccordement et la sortie de raccordement,
dans lequel le premier montant limite une ouverture de sortie (51) qui correspond à la sortie de raccordement et au premier manchon de raccordement pour canalisations, et le second montant limite une ouverture d'entrée (71) qui correspond à l'entrée de raccordement et au second manchon de raccordement pour canalisations,
dans lequel le premier montant a un premier plan principal (M) et comprend un premier pied (68) qui s'étend dans le premier plan principal espacé de l'axe central, une première tête (69) qui s'étend dans le premier plan principal espacé de l'axe central et du premier pied, et une première ouverture à poignée (59) qui forme une première poignée (52) qui s'étend dans le premier plan principal espacé de l'axe central,
dans lequel le second montant a un second plan principal (N) et comprend un second pied (88) qui s'étend dans le second plan principal espacé de l'axe central, une seconde tête (89) qui s'étend dans le second plan principal espacé de l'axe central et du second pied, et une seconde ouverture à poignée (79) qui forme une seconde poignée (72) qui s'étend dans le second plan principal espacé de l'axe central,
dans lequel le premier plan principal (M) et le second plan principal (N) sont espacés l'un de l'autre le long de l'axe central (F) et s'étendent sensiblement transversalement à l'axe central.

2. - Ensemble de raccordement portatif (1) selon la revendication 1, dans lequel la première tête (69) et la seconde tête (89) correspondent ou coïncident avec le premier pied (68) et le second pied (88) respectifs, moyennant quoi un premier ensemble de raccordement portatif (1) peut être empilé sur un second ensemble de raccordement portatif (201) en plaçant le premier pied et le second pied du premier ensemble de raccordement portatif (1) sur la première tête et la seconde tête respectives du second ensemble de raccordement portatif (201), dans lequel le premier montant (50) et/ou le second montant (70) comprend de préférence un repère d'empilement (66, 67, 86, 87) moyennant quoi les pieds (68, 88) respectifs du premier ensemble de raccordement portatif (1) s'alignent avec les têtes (69, 89) respectives du second ensemble de raccordement portatif, dans lequel le repère d'empilement comprend de préférence une came (67, 87) sur la tête (69, 89) et un renfoncement (66, 86) dans le pied (66, 86) qui correspond ou coïncide avec la came sur la tête, dans lequel la came (67, 87) recouvre de préférence sensiblement la moitié de la tête (69, 89) dans une direction parallèle à l'axe central (F).

3. - Ensemble de raccordement portatif (1) selon l'une quelconque des revendications précédentes, dans lequel le premier montant (50) et le second montant (70) sont espacés l'un de l'autre le long de l'axe central (F) sur une distance (D) qui est sensiblement égale à la largeur d'épaule d'un humain utilisant ou portant l'ensemble de raccordement portatif.

4. - Ensemble de raccordement portatif (1) selon l'une quelconque des revendications précédentes, dans lequel la première poignée (52) et la seconde poignée (72) sont espacées de l'axe central (F) sur la même hauteur.

5. - Ensemble de raccordement portatif (1) selon l'une quelconque des revendications précédentes, dans lequel la première poignée (52) et la seconde poignée (72) sont respectivement espacées du premier pied (68) et du second pied (88) sur la même profondeur.

6. - Ensemble de raccordement portatif (1) selon l'une quelconque des revendications précédentes, dans lequel la première poignée (52) forme la première tête (69).

7. - Ensemble de raccordement portatif (1) selon l'une quelconque des revendications précédentes, dans lequel la première poignée (52) s'étend au-dessus du raccord (10) dans une direction opposée à l'axe central (F).

8. - Ensemble de raccordement portatif (1) selon l'une quelconque des revendications précédentes, dans lequel le premier montant (50) recouvre le contour du raccord (10) lorsqu'il est visualisé le long de l'axe central (F).

9. - Ensemble de raccordement portatif (1) selon l'une quelconque des revendications précédentes, dans lequel le premier pied (68) et la première tête (69) sont allongés et s'étendent parallèlement entre eux au niveau des côtés opposés de l'axe central (F).

10. - Ensemble de raccordement portatif (1) selon l'une quelconque des revendications précédentes, dans lequel le premier montant (50) comprend une première nervure supérieure (53) qui s'étend le long de la première ouverture à poignée (59) transversalement au premier plan principal et qui forme la première poignée (52) et/ou la première tête (69).

11. - Ensemble de raccordement portatif (1) selon l'une quelconque des revendications précédentes, dans lequel le premier montant (50) comprend une première nervure inférieure (54) qui s'étend le long du premier montant transversalement au premier plan principal (M) et qui forme le premier pied (68).

12. - Ensemble de raccordement portatif (1) selon l'une quelconque des revendications précédentes, dans lequel le premier montant (50) et le second montant (70) sont identiques entre eux et/ou sont disposés en miroir l'un par rapport à l'autre.

13. - Ensemble de raccordement portatif (1) selon l'une quelconque des revendications précédentes, comprenant un panneau (120) qui s'étend parallèlement à l'axe central (F) entre le premier montant (50) et le second montant (70).

14. - Ensemble de raccordement portatif (1) selon l'une quelconque des revendications précédentes, comprenant un couvercle (121) qui s'étend parallèlement à l'axe central (F) entre le premier montant (50) et le second montant (70), dans lequel le couvercle (121) est préférence relié de manière articulée aux montants (50, 70) respectifs, afin de pouvoir pivoter entre une position ouverte et une position fermée autour d'un axe d'articulation qui est sensiblement parallèle à l'axe central (F).

15. - Ensemble de raccordement portatif (1) selon l'une quelconque des revendications précédentes, dans lequel le raccord (10) est relié au premier montant (50) et/ou au second montant (70) par un assemblage boulonné.

16. - Ensemble de raccordement portatif (1) selon l'une quelconque des revendications précédentes, dans lequel les manchons de raccordement pour canalisations (110, 100) respectifs sont reliés aux montants (50, 70) respectifs par collage.
